# EUROPÄISCHE PATENTANMELDUNG

(11) **EP 1 260 194 A1**
(43) Veröffentlichungstag der Anmeldung: **27.11.2002**
(21) Anmeldenummer: 02011339.5
(22) Anmeldetag: 23.05.2002
(51) Int. Cl.: A61C 15/04

(54) **Zahnseidehalter**

(30) Priorität: 25.05.2001 DE 10125482
(71) Anmelder: Staerk, Hubert, Dr., 37120 Bovenden (DE)
(72) Erfinder: Staerk, Hubert, Dr., 37120 Bovenden (DE); Staerk, Wilfried, Dipl.-Ing., 22607 Hamburg (DE); Staerk, Daniela, Dr., 70569 Stuttgart (DE)
(74) Vertreter: Patentanwälte Rehberg + Hüppe

(57) **Zusammenfassung**

Ein Zahnseidehalter (1) zur Reinigung von Zahnzwischenräumen, weist einen der Handhabung dienenden Griffteil (2) und einen Bügel (17) auf, der einen Mittelbereich (18) und zwei davon abstehende Schenkel (19, 20) aufweist. Zwischen den freien Enden der Schenkel wird ein Zahnseidefaden (14) mit einer Spann- und Klemmvorrichtung (4) aufgespannt und gehalten, die eine Bohrung (5) und eine darin verdrehbare sowie durch Reibung festsetzbare Achse (6) aufweist. Die Bohrung (5) und die Achse (6) sind stirnseitig mit randoffenen, in einer Einlegeposition des Zahnseidefadens (14) zueinander fluchtenden Schlitzen (11, 12, 13) versehen. Die Spann- und Klemmvorrichtung (4) ist im Griffteil (2) des Zahnseidehalters (1) angeordnet, mit Abstand zu den Schenkeln (19, 20) des Bügels (17) plaziert und zur zweifachen Aufnahme des Zahnseidefadens (14) an gleicher Stelle der Schlitze (11, 12, 13) zwischen Bohrung (5) und Achse (6) ausgebildet.

## Beschreibung

Die vorliegende Erfindung betrifft einen Zahnseidehalter mit den im Oberbegriff des Anspruchs 1 angegebenen Merkmalen, der als Zahnreinigungsgerät, insbesondere der Reinigung von Zahnzwischenräumen mittels Zahnseide, dient und einen Beitrag zur Verbesserung der täglichen Mundhygiene liefert.

Ein Zahnseidehalter der in Rede stehenden Art ist aus der PCT/WO 97/48349 bekannt. Der Zahnseidehalter weist ein der Handhabung dienendes langgestrecktes Griffteil auf, in welchem ein Vorrat an Zahnseide, auf eine Welle aufgewickelt untergebracht ist. Der Zahnseidehalter besitzt an seinem anderen Ende einen Bügel, der einen Mittelbereich und zwei davon abstehende Schenkel aufweist. Die beiden Schenkel des Bügels sind dabei in der Längserstreckungsrichtung des Zahnseidehalters hintereinander angeordnet, so dass sich einer der Bügel am freien Ende des Zahnseidehalters befindet, während der zweite Bügel in einem entsprechenden Abstand vorgesehen ist. Der Griffteil des Zahnseidehalters sowie der Bügel mit seinen beiden Schenkeln ist hohl ausgebildet. Zwischen den freien Enden der Schenkel wird ein Zahnseidefaden in der Gebrauchsstellung aufgespannt und festgehalten, wobei er sektorartig einen Freiraum zwischen den beiden Schenkeln überspannt. Der Zahnseidefaden wird im inneren des Zahnseidehalters von seiner Achse abgezogen und durch einen Kanal bis zum freien Ende des äußeren Schenkels des Bügels gezogen, so dass der Zahnseidefaden diesbezüglich geschützt untergebracht ist. In dem inneren Schenkel des Bügels ist eine Spann- und Klemmvorrichtung untergebracht die eine Bohrung und eine darin verdrehbare sowie durch Reibung festsetzbare Achse aufweist. Zur Verdrehung der Achse dient ein Hebel, der am einen Stirnende der Achse drehfest angeordnet ist. Benachbart zu diesem Hebel besitzt die Achse eine erste Klemmeinrichtung für den im inneren geführten Zahnseidefaden. Die Achse weist eine sich in Querrichtung erstreckende Durchbrechung auf, die der Zahnseidefaden durchsetzt. An dem anderen, dem Griffhebel abgekehrten Stirnende der Achse ist ein randoffener Schlitz vorgesehen, ebenso besitzt der innere Schenkel in Zuordnung zu diesem Bereich randoffene Schlitze. Die an die Bohrung anschließenden Schlitze und der Schlitz in der Achse können in einer Einlegeposition des Zahnseidefadens zueinander in eine fluchtende Stellung gebracht werden, wobei die Schlitze dabei in Längsrichtung des Zahnseidehalters ausgerichtet angeordnet sind. An dieser Stelle wird die zweite Klemmstelle für den Zahnseidefaden gebildet. Beide Klemmstellen sind unterschiedlich zueinander ausgebildet und angeordnet, so dass davon auszugehen ist, dass der Zahnseidefaden an den beiden Klemmstellen in der Klemmposition mit unterschiedlichen Klemmkräften gehalten wird. Somit besteht die Gefahr, dass der zwischen den freien Enden der Schenkel in der Gebrauchslage gehaltene Zahnseidefaden seine Klemmstellung an der Stelle verlässt, an der die geringere Klemmkraft einwirkt. Zum Verdrehen der gemeinsamen Achse für die beiden Klemmstellen ist ein vorgegebener Winkel in der Größenordnung von 270° festgelegt. Es ist jedoch nicht möglich, den Zahnseidefaden vor Erreichen der festgeklemmten Stellung in eine Strecklage zu bringen, um reproduzierbar die Spannung festzulegen, mit der der Zahnseidefaden in der Gebrauchsstellung gespannt und gehalten ist. Die Inbetriebnahme des bekannten Zahnseidehalters ist äußerst aufwendig und umständlich. Insbesondere das Einfädeln des Zahnseidefadens in den Halter bedarf erheblicher Geschicklichkeit. Außerdem ist dieser Zahnseidehalter praktisch nur mit einem Vorrat an Zahnseide auf einer Achse aufgewickelt, handhabbar. Einzelne Zahnseideabschnitte lassen sich mit diesem Halter nicht handhaben. Die Anordnung der Spann- und Klemmvorrichtung in dem inneren Schenkel des Bügels erfordert in nachteiliger Weise die Vergrößerung des Durchmessers des Schenkels oder die Anwendung sehr kleiner Durchmesser im Bereich der Bohrung und der Achse der Spann- und Klemmvorrichtung. Der Zahnseidehalter ermöglicht es nicht, die Spannung des Zahnseidefadens individuell und feinfühlig einzustellen oder zu regulieren.

Aus der DE 43 12 963 A1 ist es bekannt, die Spann- und Klemmvorrichtung im Endbereich des äußeren Schenkels eines Bügels eines Zahnseidehalters anzuordnen. Dabei wird eine Achse, die in ihrer am einen Endbereich einen randoffenen Schlitz aufweist, in eine Bohrung quer zur Haupterstreckungsrichtung des Schenkels eingeführt. An die Bohrung schließen sich randoffene Schlitze an, die mit dem randoffenen Schlitz in der Stirnseite der Achse zur Deckung gebracht werden können. Mit der anderen Stirnseite ist ein radial abstehender Spannhebel verbunden. Auf diese Weise wird von der Spann- und Klemmvorrichtung eine Klemmstelle geschaffen, in die der Zahnseidefaden mit seinem freien Endbereich eingeführt und durch Drehen der Achse um einen festgelegten Winkel festgeklemmt werden soll. Dies ist jedoch nur dann möglich, wenn das andere Ende des Fadens, beispielsweise aufgewickelt auf einem Fadenvorrat, festgehalten und blockiert wird. Eine feinfühlige individuelle Spannungsregulierung des Zahnseidefadens ist auch hier nicht möglich, da der Drehhebel in der blockierten Stellung ausgerichtet zu der Erstreckung des äußeren Schenkels festgelegt ist.

Aus der US 6,123,087 ist ein Zahnseidehalter bekannt, der mit einem auf einer Spule aufgewickelten Zahnseidevorrat arbeitet und einen C-förmigen Bügel besitzt, dessen beide Schenkel in Längsrichtung des Zahnseidehalters ausgerichtet angeordnet sind. Zur Führung des Zahnseidefadens sind im Bereich des Bügels Führungselemente in Form einer Nut und eines Vorsprunges vorgesehen, mit deren Hilfe der Zahnseidefaden gleichsam in den Umriss des C-förmigen Bügels gezwungen wird, so dass der von dem Bügel umschlossene Freiraum praktisch nur von dem sekantenartig aufgespannten Zahnseidefaden durchsetzt wird. Im Bereich des Griffteils ist eine Schraubklemmung für das freie Ende des Zahnseidefadens vorgesehen, die mit einer Sperre an dem Spulenvorrat zusammenarbeiten, so dass es der Geschicklichkeit des Benutzers überlassen bleibt, den Zahnseidefaden über den Bügel zu führen und festzuspannen. Die Spann- und Klemmeinrichtung ist gleichsam als Schrauben/Mutternverbindung ausgebildet, und legt den Zahnseidefaden mit der Spannung fest, die vor dem Anziehen der Mutter auf diesen manuell aufgebracht worden ist. Die reproduzierbare Einstellung und feinfühlige Regulierung einer Fadenspannung ist problematisch bzw. nicht möglich.

Der Erfindung liegt die Aufgabe zugrunde, eine Vorrichtung der eingangs beschriebenen Art derart weiterzubilden, dass mit ihr bei erleichterter Handhabung ein feinfühliges Spannen und Festhalten eines Zahnseidefadens möglich wird.

Erfindungsgemäß wird dies bei einem Zahnseidehalter der in Rede stehenden Art dadurch erreicht, dass die Spann- und Klemmvorrichtung im Griffteil des Zahnseidehalters angeordnet, mit Abstand zu den Schenkeln des Bügels plaziert und zur zweifachen Aufnahme des Zahnseidefadens an gleicher Stelle der Schlitze zwischen Bohrung und Achse ausgebildet ist.

Die Erfindung baut auf der Erkenntnis auf, die Spann- und Klemmvorrichtung nicht mehr in den Schenkeln des Bügels zu platzieren, sondern im Griffteil des Zahnseidehalters. Es handelt sich dabei um eine solche Spann- und Klemmvorrichtung, die mit einer in einer Bohrung verdrehbaren Achse arbeitet, wobei der Zahnseidefaden zwischen Bohrung und Achse eingeklemmt und die Achse durch Reibung fixiert bzw. festgehalten wird. Die Größe des Verdrehwinkels ist dabei stufenlos veränderbar, d. h. die Achse kann ausgehend von der Einlegestellung des Fadens in die Gebrauchsstellung, in der der Zahnseidefaden gespannte gehalten ist, feinfühlig verdreht werden, wobei mit vergleichsweise größerem Verdrehwinkel einerseits eine erhöhte Festhaltekraft und andererseits eine erhöhte Spannung des Zahnseidefadens zwischen den freien Enden des Bügels verbunden ist. Durch die Anordnung der Spann- und Klemmvorrichtung im Griffteil des Zahnseidehalters wird eine Stelle genutzt, in welcher auf besondere Kleinheit der Ausbildung der Elemente der Spann- und Klemmvorrichtung keine Rücksicht genommen werden muss. Umgekehrt können die Schenkel des Bügels vorteilhaft mit kleinem bzw. geringdimensioniertem Querschnitt ausgebildet werden, wie es für eine Handhabung im Mund förderlich ist. Die Spann- und Klemmvorrichtung wird mit Abstand zu den Schenkeln des Bügels platziert, bei einem C-förmig ausgebildeten Bügel, auch mit Abstand zum inneren Schenkel, so dass dieser Bereich, der bei Benutzung des Zahnseidehalters im Mund mit den Lippen des Benutzers in Kontakt kommen kann, ebenfalls vorteilhaft frei von der Anordnung der Spann- und Klemmvorrichtung ist.

Eine wesentliche Besonderheit der Spann- und Klemmvorrichtung besteht darin, dass diese zur zweifachen Aufnahme des Zahnseidefadens ausgebildet und bestimmt ist. Der Zahnseidefaden wird also mit dieser einzigen Spann- und Klemmvorrichtung an der gleichen Stelle der Schlitze zwischen Bohrung und Achse zweifach eingeklemmt. Durch diese gleichzeitige zweifache Einklemmung entsteht eine vergleichsweise vergrößerte Reibung als wenn der Faden nur einfach eingeklemmt würde. Vor allen Dingen aber wird sich eine Klemmkraft einstellen, die an den gemeinsam geklemmten beiden Stellen des Fadens gleich groß und abhängig von dem zurückgelegten Verdrehwinkel ist. Auf diese Weise wird der Zahnseidefaden gleichsam an seinen beiden Enden jeweils mit gleicher Haltekraft festgehalten, unabhängig welche Größe diese beiden Haltekräfte einnehmen. Insoweit kann die Spannung des Zahnseidefadens zwischen den freien Enden der Schenkel des Bügels feinfühlig eingestellt werden. Der Verdrehwinkel der Achse, der von der Einlegestellung bis in die Klemmstellung zurückzulegen ist, ist von vornherein nicht beschränkt und auch nicht auf einen bestimmten Winkel begrenzt. Die Handhabung der Spann- und Klemmvorrichtung ist besonders einfach und augenfällig. Komplizierte Einfädelvorgänge werden vermieden, da der Zahnseidefaden weitgehend außen am äußeren Umfang des Zahnseidehalters festgelegt und geführt ist.

Besonders vorteilhaft ist es, wenn die im Griffteil ausgebildeten Schlitze der Bohrung in Längsrichtung des Griffteils ausgerichtet angeordnet und im Bereich eines gegenüber der Umgebung am Griffteil vorstehenden Sockels vorgesehen sind. Die ausgerichtete Anordnung der Schlitze der Bohrung erfordert zur Einnahme der Einlegeposition auch eine entsprechende Verdrehung der Achse, so dass die Schlitze der Achse mit den Schlitzen der Bohrungen fluchten. Dies ist dann in Längsrichtung des Griffteils der Fall, so dass die Möglichkeit besteht, beispielsweise einen Zahnseideabschnitt in ordnungsgemäßer Umschlingung des Bügels an seinen beiden Endbereichen zu ergreifen und daran zu ziehen, bevor, bzw. während die Achse gegenüber der Bohrung verdreht wird. Damit ist es möglich, reproduzierbar ähnliche Spannungen an dem Zahnseidefaden bei in etwa übereinstimmenden Verdrehwinkeln der Achse herbeizuführen. Der gebildete Sockel steht nach Art eines Vorsprunges vor, und zwar vorzugsweise in Gebrauchsrichtung, so dass sich der zweifache Zahnseidefaden am Grund der fluchtenden Schlitze reproduzierbar einführen und festlegen lässt.

Noch besser ist es, wenn am Griffteil auf der den Schenkeln abgekehrten Seite des Sockels eine Vertiefung vorgesehen ist, die eine Daumenauflage zum Überführen des Zahnseidefadens in eine gestreckte Stellung bildet. Mit Hilfe der eine Daumenauflage bildenden Vertiefung ist es in einfacher Weise möglich, beide Enden eines Abschnittes eines Zahnseidefadens in eine gestreckte Stellung überzuführen und zu halten, um dann durch Verdrehung der Achse die Spann- und Gebrauchslage einstellen zu können. Bei dieser Ausbildung ist es auch leicht möglich, bereits eine gewisse Vorspannung auf den Faden in der Einlegestellung auszuüben. All diese Merkmale und vorteilhaften Wirkungen der Erfindung können in gleicher Weise angewendet und genutzt werden, unabhängig davon, ob in dem Zahnseidehalter ein Vorrat an Zahnseide vorhanden ist oder mit vorher abgelängten Abschnitten eines Zahnseidefadens gearbeitet wird. Die Erfindung lässt sich auch unabhängig davon anwenden, ob der Bügel, wie an sich bekannt, C-förmig ausgebildet ist oder Y-förmig.

In einer bevorzugten Ausführungsform ist der Bügel mit den Schenkeln C-förmig ausgebildet und in Längsrichtung des Griffteils angeordnet, wobei am Griffteil auf der den Schenkeln zugekehrten Seite des Sockels eine randoffene Ausnehmung vorgesehen ist. Die erfindungsgemäße Ausbildung des Zahnseidehalters lässt es ohne weiteres zu, eine randoffene Ausnehmung dort vorzusehen, wo in der Gebrauchslage die Lippe des Benutzers zu liegen kommt. Um hier einen Freiraum und eine gute Beweglichkeit und Erreichbarkeit der Zahnzwischenräume zu ermöglichen, ist diese randoffene Ausnehmung vorgesehen. Vorteilhaft erstreckt sich die randoffene Ausnehmung zwischen dem inneren Schenkel und dem Sockel der Spann- und Klemmvorrichtung.

Bei einer anderen bevorzugten Ausführungsform ist der Bügel mit den Schenkeln Y-förmig ausgebildet und in Längsrichtung des Griffteils abgewinkelt angeordnet. Diese Ausführungsform ist besonders geeignet, wenn die Reinigung der Zahnzwischenräume durch eine andere Person erfolgt. Die C-förmige Ausbildung und Anordnung des Bügels ist dagegen für eine Selbstbehandlung vorteilhaft.

Bei allen Ausführungsformen sind am Bügel Führungs- und Umlenkelemente für den Zahnseidefaden vorgesehen. Die Führungs- und Umlenkelemente können ganz verschiedene Formen aufweisen. Sie können beispielsweise aus nutenartigen Vertiefungen bestehen, die auf der Außenseite des Bügels bzw. der Schenkel angeordnet sind. Insbesondere in Bereichen starker Umlenkung der Erstreckungsrichtung des Zahnseidefadens sind solche Elemente erforderlich. Die Führungs- und Umlenkelemente können aber auch von Vorsprüngen, noppenartigen Fortsätzen u. dgl. gebildet werden, zwischen denen der Zahnseidefaden geführt wird. Auch die Anordnung einer oder mehrerer Umlenkrampen ist durchaus möglich und sinnvoll. Die Ausbildung und Platzierung der Führungs- und Umlenkelemente sollte dabei so durchgeführt werden, dass der zwischen den Schenkeln und dem Mittelbereich des Bügels aufgespannte Freiraum nur ein einziges Mal sektorartig von dem gespannt gehaltenen Zahnseidefaden durchmessen wird und ansonsten frei bleibt. Auch die randoffene Ausnehmung zwischen Sockel und innerem Schenkel sollte so freibleiben, indem der Zahnseidefaden in den Querschnitt des Zahnseidehalters zurücktritt. In Verbindung damit sollten die freien Enden der Schenkel des Bügels eingekerbt ausgebildet sein. Dies dient der sicheren und verlässlichen Unterbringung des Zahnseidefadens in der Gebrauchsstellung. Andererseits lässt sich der Zahnseidefaden bei der Bestückung des Zahnseidehalters sehr einfach von außen handhaben und festlegen. Jegliche Einfädelarbeit in eine enge Bohrung oder Öse o. dgl. wird dabei vermieden.

Wenn die Führungs- und Umlenkelemente für den Zahnseidefaden auf der den freien Enden der Schenkel abgekehrten Seite des Bügels angeordnet sind, lässt sich der Zahnseidefaden besonders einfach am Zahnseidehalter auflegen und handhaben. Auch die Abnahme des Zahnseidefadens nach Gebrauch ist vergleichsweise einfach.

Sinnvoll ist es, wenn die Achse der Spann- und Klemmvorrichtung auf der dem randoffenen Schlitz abgekehrten Stirnseite ein Spannrad trägt. Die Anordnung eines Spannrades anstelle eines radial abstehenden Hebels vereinfacht und erleichtert den Gebrauch. Zwischen Daumen und Zeigefinger lässt sich das Spannrad in einfacher Weise ergreifen und verdrehen, ohne dass das Spannrad einen entsprechend großen Durchmesser aufweisen müsste. Dies fördert die Gebrauchseigenschaften des Zahnseidehalters, obwohl das Spannrad durch die Anordnung der Spann- und Klemmvorrichtung im Griffteil außerhalb des Bereiches im Mund liegt. Ein solches Spannrad kann mit Markierungen oder sonstigen Kennzeichnungen versehen sein, um die Einlegestellung dem Benutzer anzuzeigen, in der die Schlitze der Achse und die Schlitze im Anschluss an die Bohrung im Sockel miteinander fluchten. Auch die Verdrehstellung kann auf diese Art und Weise angezeigt werden, damit der Benutzer ein Gefühl dafür entwickelt, um welchen Winkel die Achse zwischen der Einlegestellung und der Spannstellung verdreht werden soll bzw. verdreht werden muss.

Die Erfindung wird anhand einiger bevorzugter Ausführungsbeispiele weiter erläutert und beschrieben. Es zeigen:
- Fig. 1: eine teilweise geschnittene Seitenansicht einer ersten Ausführungsform des Zahnseidehalters,
- Fig. 2: eine Draufsicht auf den Zahnseidehalter gemäß Fig. 1,
- Fig. 3: eine Darstellung des Zahnseidehalters der Figuren 1 und 2 in der Einlegestellung mit gestreckter Ausrichtung des Zahnseidefadens,
- Fig. 4: die Halterung des Zahnseidehalters in einer Gebrauchsstellung,
- Fig. 5: eine Seitenansicht eines Zahnseidehalters in einer zweiten Ausführungsform, teilweise geschnitten,
- Fig. 6: eine Draufsicht auf den Zahnseidehalter gemäß Fig. 5,
- Fig. 7: eine Einzelheit des Zahnseidehalters gemäß Fig. 6,
- Fig. 8: eine Seitenansicht einer dritten Ausführungsform des Zahnseidehalters mit einer Vorratsspule,
- Fig. 9: eine Draufsicht auf den Zahnseidehalter gemäß Fig. 8,
- Fig. 10: eine abgewandelte Ausführungsform des Zahnseidehalters,
- Fig. 11: eine vergrößerte Darstellung der Spann- und Klemmvorrichtung in besonderer Ausführung, und
- Fig. 12: eine Draufsicht auf die Ausführungsform gemäß Fig. 11.

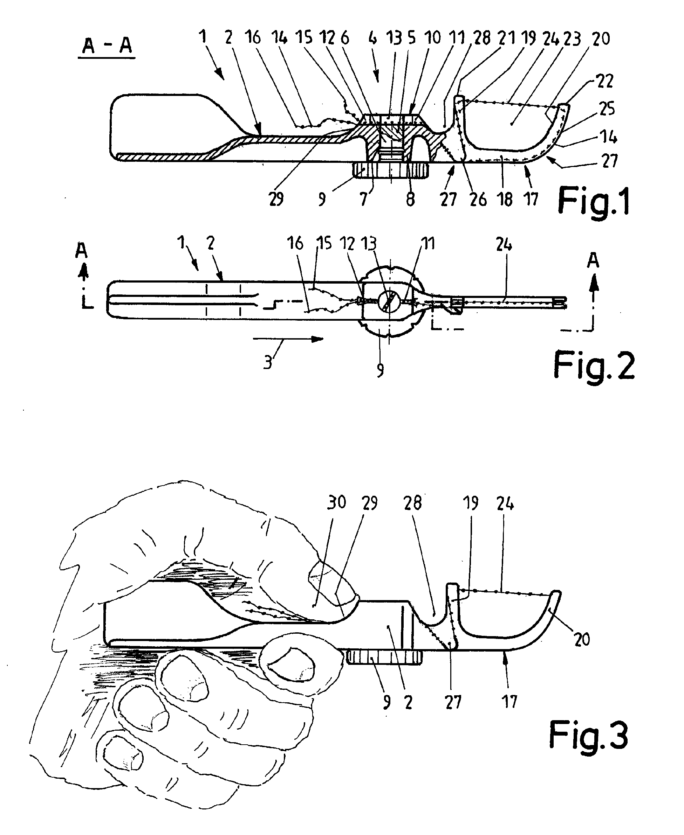

Der in Fig. 1 dargestellte Zahnseidehalter 1 weist ein der Handhabung dienendes Griffteil 2 auf, welches die aus den Fig. 1 und 2 ersichtliche langgestreckte Formgebung besitzt. Dieser Griffteil 2 erstreckt sich im wesentlichen in Längsrichtung 3, die durch Angabe eines Pfeiles in Fig. 2 angezeigt ist. Im Bereich des Griffteils 2 ist eine Spann- und Klemmvorrichtung 4 untergebracht, deren wesentliche Bestandteile eine im Griffteil 1 vorgesehene Bohrung 5 und eine Achse 6 sind. Die Bohrung 5 und die zugehörige Achse 6 durchsetzen das Griffteil 2 etwa senkrecht zu seiner Längsrichtung 3. Die Achse 6 weist eine vorstehende Wulst 7 auf, die in eine Nut 8 in der Bohrung 5 eingreift. Wulst 7 und Nut 8 bilden einen Ringschnappverschluss, mit dessen Hilfe die Achse 6 in die Bohrung 5 eingeführt und gesichert werden kann, so dass die Achse 6 die Bohrung 5 nicht ungewollt verlassen kann. Am einen Ende der Achse 6 ist ein Spannrad 9 angeordnet, mit dessen Hilfe die Achse 6 in der Bohrung 5 verdreht werden kann. Das Spannrad 9 besitzt nur einen geringfügig größeren Durchmesser als die Breite des Griffteils 2. Es kann auf dem Umfang gerändelt oder gekerbt ausgebildet sein, um ein leichteres Ergreifen des Spannrades 9 beim Verdrehen der Achse zu ermöglichen.

Im Bereich der Spann- und Klemmvorrichtung weist der Griffteil 2 auf der dem Spannrad 9 gegenüberliegenden Seite einen Sockel 10 auf, der zylindrische bzw. kegelförmige Gestalt besitzt und sich nach Art eines Vorsprunges aus der Umgebung der Oberfläche des Griffteiles 2 heraus erhebt. Der Sockel 10 kann auch eine etwa rechteckförmige Begrenzung aufweisen, wie dies aus Fig. 2 erkennbar ist. Der Sockel 10 ist im Anschluss an die Bohrung 5 von randoffenen Schlitzen 11 und 12 durchsetzt, die eine Tiefe von 2-4 mm aufweisen können. Die Schlitze 11 und 12 sind in Längsrichtung 3 des Griffteils 2 ausgerichtet angeordnet. Korrespondierend dazu besitzt das dem Spannrad 9 abgekehrte Ende der Achse 6 ebenfalls einen randoffenen Schlitz 13. Durch Verdrehen des Spannrades 9 kann der Schlitz 13 in eine fluchtende Anordnung zu den Schlitzen 11 und 12 gebracht werden. Dies stellt die Einlegeposition für einen Zahnseidefaden 14 dar. Der Zahnseidefaden 14 stellt einen Abschnitt dar, dessen beide Enden 15 und 16 in Fig. 1 gut erkennbar sind. Die Spann- und Klemmvorrichtung 4 mit der Bohrung 5 und der Achse 6 ist so ausgebildet und dimensioniert, dass unter Berücksichtigung des Durchmessers des Zahnseidefadens 14 eine Klemm- bzw. Reibpassung erzielt wird. Nach dem Einführen des Zahnseidefadens 14 in die randoffenen Schlitze 11, 12, 13 wird die Achse 6 mit Hilfe des Spannrades 9 verdreht. Fig. 2 zeigt eine solche verdrehte Stellung. Dabei wird der Zahnseidefaden 14 zwischen der Außenwandung der Achse 6 und der Bohrung 5 in verschiedenen Umfangsbereichen mehrfach und gegeneinander festgeklemmt. Nach dem Loslassen des Spannrades 9 verbleibt die Spann- und Klemmvorrichtung 4 in dieser Klemmstellung und hält den Zahnseidefaden 14 fest.

Der Griffteil 2 des Zahnseidehalters 1 geht an seinem vorderen Ende in einen Bügel 17 über bzw. ist mit einem solchen Bügel 17 versehen. Der Bügel 17 weist einen Mittelbereich 18 und zwei Schenkel 19 und 20 auf. Der Bügel 17 besitzt C-förmige Gestalt. Der äußere Schenkel 20 ist am freien Ende des Zahnseidehalters 1 angeordnet, während der Schenkel 19 als innerer Schenkel der Spann- und Klemmvorrichtung 4 zugeordnet ist. Auch der Bügel 17 mit seinen Schenkeln 19 und 20 ist in Längsrichtung 3 ausgerichtet angeordnet.

Der Schenkel 19 besitzt ein freies Ende 21, welches eingekerbt ausgebildet ist. Auch der äußere Schenkel 20 ist mit einem freien Ende 22 versehen, welches in ähnlicher Weise eingekerbt ist. Der Mittelbereich 18 und die beiden Schenkel 19 und 20 schließen einen Freiraum 23 ein, der von dem Zahnseidefaden 14 mit einem sektorartigen Teil 24 überspannt wird. Insbesondere die Einkerbung am freien Ende 22 des äußeren Schenkels 20 setzt sich auf der dem Freiraum 23 abgekehrten Seite in einer Nut 25 fort, die sich zumindest im Übergangsbereich zwischen dem Mittelbereich 18 und dem Schenkel 20 erstreckt. Die Nut 25 kann sich auch noch über einen gewissen Teil des Mittelbereiches 18 erstrecken. Die Nut 25 kann auch durch Vorsprünge, Noppen o. dgl. ersetzt sein, die zweckmäßig paarweise angeordnet sein können, um den Zahnseidefaden 14 außen an dem Schenkel 20 zu halten und den Freiraum 23 mit Ausnahme des Teils 24 frei von dem Zahnseidefaden 14 zu halten. Auch der innere Schenkel 19 kann im Anschluss an die eingekerbte Ausbildung des freien Endes mit einer Nut, einem Vorsprung o. dgl. versehen sein. Insbesondere im Übergangsbereich zwischen dem Mittelbereich 18 und dem Schenkel 19 ist eine Führungsrampe 26, z. B. in Form eines seitlich (Fig. 2) vorstehenden Noppens, eines Vorsprunges o. dgl., vorgesehen. Die Nuten 25, Vorsprünge, Führungsrampen 26 u. dgl. bilden insgesamt Führungs- und Umlenkelemente 27, die so ausgebildet und angeordnet sind, dass der Zahnseidefaden 14 im wesentlichen in der seitlichen Projektion (Fig. 1) des C-förmig ausgebildeten Bügels 17 zu liegen kommt. Dabei ist es auch wichtig, zwischen dem innenliegenden Schenkel 19 des Bügels 17 und dem Sockel 10 eine Ausnehmung 28 vorzusehen. Auch diese randoffene Ausnehmung 28 muss von dem Zahnseidefaden 14 frei bleiben. In der Gebrauchslage stellt dies die Stellung dar, die etwa die Relativlage der Lippen des Benutzers des Zahnseidehalters einnehmen.

Auf der dem Bügel 17 abgekehrten Seite des Sockels 10 ist am Griffteil 2 eine Vertiefung 29 gebildet, die eine Daumenauflage 30 (Fig. 3) ermöglicht.

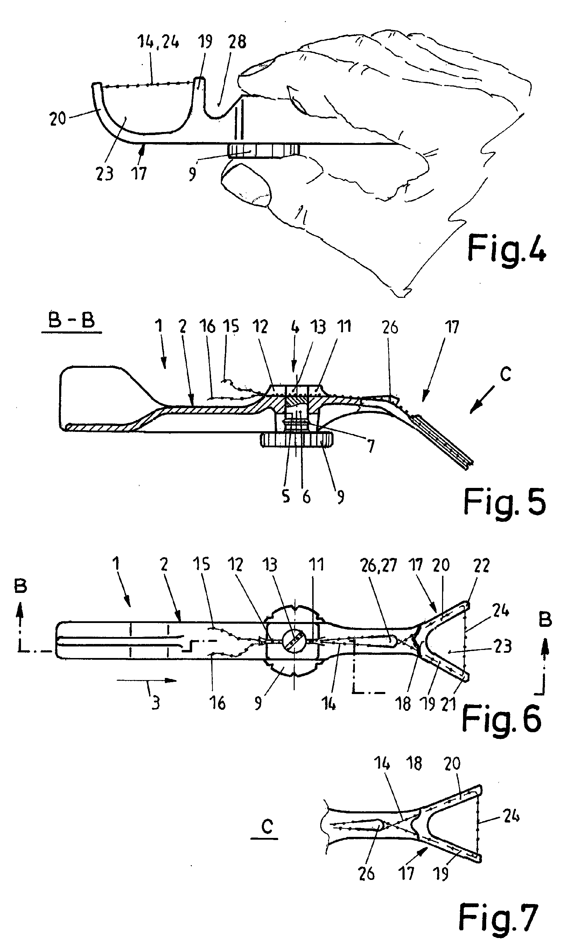

Zum Bestücken des Zahnseidehalters 1 mit einem Abschnitt eines Zahnseidefadens 14 wird die Achse 6 mit Hilfe des Spannrades 9 zunächst in eine Einlegeposition gedreht, in der die Schlitze 11, 12, 13 miteinander fluchten. Das eine Ende 15 des Zahnseidefadens 14 wird mit Hilfe der Daumenauflage 30 in der Vertiefung 29 festgehalten und mit der anderen Hand in die fluchtenden Schlitze 12, 13, 11 eingelegt. Der Zahnseidefaden 14 wird weiterhin um die Führungsrampe 26 herumgeschlungen und nach aufwärts in das gekerbte Ende des inneren Schenkels 19 eingefügt. Nachfolgend wird der Zahnseidefaden 14 über das eingekerbte Ende 22 des Schenkels 20 gelegt, so dass sich der Teil 24 des Zahnseidefadens 14 in eine gestreckte Lage begibt. Der Zahnseidefaden 14 wird weiterhin in die Nut 25 der Führungs- und Umlenkelemente 27 und weiter um die Führungsrampe 26 geschlungen, bis schließlich auch das andere Ende 16 in die immer noch fluchtenden Schlitze 11, 13, 12 eingefügt wird. Beide Enden 15 und 16 werden durch die Daumenauflage 30 in der Vertiefung 29 gehalten, wobei auch eine geringfügige Vorspannung auf den Zahnseidefaden 14 ausgeübt werden kann. Auf jeden Fall wird der Zahnseidefaden 14 in eine gestreckte straffe Lage überführt. Die beiden Enden 15 und 16 des Zahnseidefadens 14 können dabei mit einer Hand mit Hilfe des Daumens festgehalten werden. Ein geringfügiges Nachspannen und Nachausrichten ist auch unter Zuhilfenahme der anderen Hand durch Ergreifen der Enden 15 und 16 möglich. Nachdem der Abschnitt des Zahnseidefadens 15 und 16 in dieser gestreckten Ausgangslage gehalten ist, wird das Spannrad 9 verdreht. Es gelangt dann in eine Relativlage, wie es in Fig. 2 dargestellt ist. Der Zahnseidefaden 14 wird zwischen der Achse 6 und der Bohrung 5 eingeklemmt und festgehalten. Wichtig ist es zu erkennen, dass beide Endbereiche des Zahnseidefadens 14 an der gleichen Stelle über die Spann- und Klemmvorrichtung 4 eingeklemmt und gehalten werden. Der Zahnseidefaden 14 wird also gleichsam zweifach an gleicher Stelle eingespannt. Damit ist die Gewähr dafür gegeben, dass im Bereich beider eingeklemmter Enden des Zahnseidefadens 14 gleiche Reib- und Festhaltekräfte ausgeübt werden, so dass der Zahnseidefaden 14 insbesondere mit seinem Teil 24 zwischen den Schenkeln 19 und 20 in gespannter Stellung festgehalten wird, so dass auch mit einer Querkraftbeanspruchung, wie es beim Säubern der Zahnzwischenräume der Fall ist, der feste Klemmsitz des Zahnseidefadens 14 in der Spannund Klemmvorrichtung 4 nicht verlorengeht. Es ist ohne weiteres erkennbar, dass das Spannrad 9 und mit ihm die Achse 6 in unterschiedlichen Drehwinkeln verschieden weit verdreht und dann losgelassen werden kann. Damit ist es möglich, die Spannung des Teils 24 des Zahnseidefadens 14 feinfühlig einzustellen. Die Klemm- und Spannstellung der Spann- und Klemmvorrichtung 4 kann in der Gebrauchsstellung (Fig. 4) durch die Auflage des Daumens auf dem Spannrad noch zusätzlich gehalten und fixiert werden. Andererseits ist es jederzeit möglich, z. B. dann, wenn sich der Zahnseidefaden 14 in einem Zahnzwischenraum oder an einer Brücke verhakt hat, die Spann- und Klemmvorrichtung 4 zu lösen, um den Zahnseidefaden 14 durch die Reinigungsstelle herauszuziehen.

In den Fig. 5 bis 7 ist eine weitere Ausführungsform des Zahnseidehalters 1 dargestellt. Der Bügel 17 besitzt hier Y-artige Form und ist zur Längsrichtung 3 des Griffteiles 2 abgewinkelt angeordnet, wie dies Fig. 5 zeigt. Beide Schenkel 19 und 20 des Bügels 17 erstrecken sich hier gabelartig in Längsrichtung 3 bzw. zu der Längsrichtung 3. Auch hier sind wiederum Führungselemente 27 in Form einer Führungsrampe 26, die zum zweimaligen Umschlingen mit dem Zahnseidenfaden 14 ausgebildet ist, sowie ggf. Nuten außen an den Schenkeln 19 und 20 vorgesehen. Die Belegung des Zahnseidehalters 1 mit einem Zahnseidefaden 14 geschieht entsprechend der Ausführungsform gemäß den Fig. 1 bis 4, weshalb auf die diesbezügliche Beschreibung verwiesen werden kann. Ein solcher Zahnseidehalter 1 mit einem Y-förmigen Bügel wird vorzugsweise von einer anderen Person, beispielsweise einer Zahnarzthelferin o. dgl., bei der Reinigung von Zahnzwischenräumen des Patienten benutzt. Die Ausführungsform gemäß Fig. 1 bis 4 ist dagegen vorzugsweise für die Selbstanwendung gedacht.

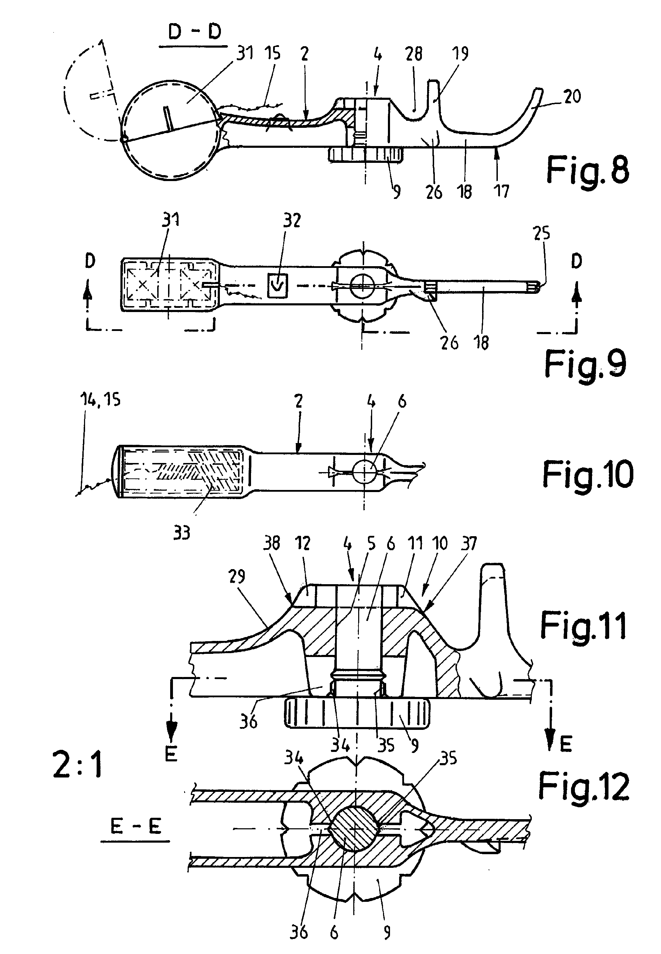

Es ist erkennbar, dass die Erfindung unabhängig davon angewendet werden kann, ob auf dem Zahnseidehalter 1 ein von vornherein abgelängter Abschnitt eines Zahnseidefadens 14 Anwendung findet oder ob der Zahnseidefaden 14 in Form einer Vorratsspule auf dem Zahnseidehalter 1 angeordnet ist. Die Fig. 8 und 9 zeigen eine Weiterbildung der Ausführungsform gemäß Fig. 1 bis 4 mit einem spulenförmigen Vorrat 31 an Zahnseide an dem dem Bügel 17 abgekehrten Ende des Griffteils 2. Im Bereich des Griffteils 2, jedoch außerhalb des Bügels 17, kann ein Messer oder eine Fadenabtrennschuppe 32 vorgesehen sein, um nach einer Reinigung den benutzten Teil des Zahnseidefadens 14 abzutrennen.

Fig. 10 zeigt eine Spule 33, auf der ein Vorrat Zahnseide untergebracht ist. Auch hier lässt sich der Zahnseidefaden 14 mit seinem Ende 15 abziehen und der Zahnseidehalter 1 damit belegen, wie dies anhand der Ausführungsbeispiele mit einem Abschnitt eines Zahnseidefadens 14 beschrieben wurde.

In den Fig. 11 und 12 sind noch einige Einzelheiten der Spannund Klemmvorrichtung 4 erkennbar. An der Achse 6 sind in axialer Richtung Vorsprünge 34 und 35 vorgesehen, die in eine schlitzförmige Ausnehmung 36 des Sockels 10 auf der dem Spannrad 9 zugekehrten Seite einrasten können. Diese Einraststellung ist dann die Belegungsstellung, in der die randoffenen Schlitze 11, 12, 13 miteinander fluchten. Beim Verdrehen der Achse 6 tritt eine gewisse Klemmwirkung zu den Wandungen der schlitzförmigen Ausnehmung 36 ein. Es ist auch möglich, anderweitig Markierungen und Kennzeichnungen vorzusehen, um einem sehschwachen Benutzer die Einlegestellung deutlich anzuzeigen. Der Auslauf 37 des Schlitzes 11 kann abgerundet bzw. ausgerundet ausgebildet sein, um den Zahnseidefaden 14 beim Einnehmen der gespannten Stellung nicht zu beeinträchtigen. Dagegen sollte ein Auslauf 38 im Anschluss an den Schlitz 12 und im Übergangsbereich zu der Vertiefung 29 scharfkantig ausgebildet sein, damit durch die Daumenauflage 20 der Zahnseidefaden 14 hier sicher festgehalten werden kann.

### BEZUGSZEICHENLISTE

- 1 -: Zahnseidehalter
- 2 -: Griffteil
- 3 -: Längsrichtung
- 4 -: Spann- und Klemmvorrichtung
- 5 -: Bohrung
- 6 -: Achse
- 7 -: Wulst
- 8 -: Nut
- 9 -: Spannrad
- 10 -: Sockel

- 11 -: Schlitz
- 12 -: Schlitz
- 13 -: Schlitz
- 14 -: Zahnseidefaden
- 15 -: Ende
- 16 -: Ende
- 17 -: Bügel
- 18 -: Mittelbereich
- 19 -: Schenkel

- 20 -: Schenkel
- 21 -: Ende
- 22 -: Ende
- 23 -: Freiraum
- 24 -: Teil
- 25 -: Nut
- 26 -: Führungsrampe
- 27 -: Führungs- und Umlenkelement
- 28 -: Ausnehmung
- 29 -: Vertiefung
- 30 -: Daumenauflage

- 31 -: Vorrat
- 32 -: Fadenabtrennschuppe
- 33 -: Spule
- 34 -: Ausnehmung
- 35 -: Ausnehmung
- 36 -: Ausnehmung
- 37 -: Auslauf
- 38 -: Auslauf

## Patentansprüche

1. Zahnseidehalter (1) zur Reinigung von Zahnzwischenräumen, mit einem der Handhabung dienenden Griffteil (2), einem Bügel (17), der einen Mittelbereich (18) und zwei davon abstehende Schenkel (19, 20) aufweist, zwischen deren freien Enden ein Zahnseidefaden (14) mit einer Spann- und Klemmvorrichtung (4) aufgespannt und gehalten wird, die eine Bohrung (5) und eine darin verdrehbare sowie durch Reibung festsetzbare Achse (6) aufweist, wobei die Bohrung (5) und die Achse (6) stirnseitig mit randoffenen, in einer Einlegeposition des Zahnseidefadens (14) zueinander fluchtenden Schlitzen (11, 12, 13) versehen sind, **dadurch gekennzeichnet, dass** die Spann- und Klemmvorrichtung (4) im Griffteil (2) des Zahnseidehalters (1) angeordnet, mit Abstand zu den Schenkeln (19, 20) des Bügels (17) plaziert und zur zweifachen Aufnahme des Zahnseidefadens (14) an gleicher Stelle der Schlitze (11, 12, 13) zwischen Bohrung (5) und Achse (6) ausgebildet ist.

2. Zahnseidehalter nach Anspruch 1, **dadurch gekennzeichnet, dass** die im Griffteil (2) ausgebildeten Schlitze (11, 12) der Bohrung (5) in Längsrichtung (3) des Griffteils (2) ausgerichtet angeordnet und im Bereich eines gegenüber der Umgebung am Griffteil (2) vorstehenden Sockels (10) vorgesehen sind.

3. Zahnseidehalter nach Anspruch 1 und 2, **dadurch gekennzeichnet, dass** am Griffteil (2) auf der den Schenkeln (19, 20) abgekehrten Seite des Sockels (10) eine Vertiefung (29) vorgesehen ist, die eine Daumenauflage (30) zum Überführen des Zahnseidefadens (14) in eine gestreckte Stellung bildet.

4. Zahnseidehalter nach Anspruch 1, **dadurch gekennzeichnet, dass** der Bügel (17) mit den Schenkeln (19, 20) C-förmig ausgebildet und in Längsrichtung (3) des Griffteils (2) angeordnet ist und dass am Griffteil (2) auf der den Schenkeln (19, 20) zugekehrten Seite des Sockels (10) eine randoffene Ausnehmung (28) vorgesehen ist.

5. Zahnseidehalter nach Anspruch 4, **dadurch gekennzeichnet, dass** sich die randoffene Ausnehmung (28) zwischen dem inneren Schenkel (19) und dem Sockel (10) der Spann- und Klemmvorrichtung (4) erstreckt.

6. Zahnseidehalter nach Anspruch 1, **dadurch gekennzeichnet, dass** der Bügel (17) mit den Schenkeln (19, 20) Y-förmig ausgebildet und in Längsrichtung (3) des Griffteils (2) abgewinkelt angeordnet ist.

7. Zahnseidehalter nach einem oder mehreren der Ansprüche 1 bis 6, **dadurch gekennzeichnet, dass** am Bügel (17) Führungs- und Umlenkelemente (27) für den Zahnseidefaden (14) vorgesehen sind.

8. Zahnseidehalter nach Anspruch 7, **dadurch gekennzeichnet, dass** die freien Enden (21, 22) der Schenkel (19, 20) des Bügels (17) eingekerbt ausgebildet sind.

9. Zahnseidehalter nach Anspruch 8, **dadurch gekennzeichnet, dass** die Führungs- und Umlenkelemente (27) für den Zahnseidefaden (14) auf der den freien Enden (21, 22) der Schenkel (19, 20) abgekehrten Seite des Bügels (17) angeordnet sind.

10. Zahnseidehalter nach einem der Ansprüche 1 bis 9, **dadurch gekennzeichnet, dass** die Achse (6) der Spann- und Klemmvorrichtung (4) auf der dem randoffenen Schlitz (13) abgekehrten Stirnseite ein Spannrad (9) trägt.
